Europäisches Patentamt

European Patent Office

Office européen des brevets

(19)

(11) Veröffentlichungsnummer: **0 312 490 B1**

# (12) EUROPÄISCHE PATENTSCHRIFT

(45) Veröffentlichungstag der Patentschrift:
25.09.91 Patentblatt 91/39

(51) Int. Cl.⁵: **B65B 35/50, B65B 23/14**

(21) Anmeldenummer: 88810596.2

(22) Anmeldetag: 29.08.88

(54) **Verfahren und Vorrichtung zur Bildung und zum Transport von Gruppen flachseitig aneinander liegender Nahrungsmittelscheiben, insbesondere Biscuits.**

(30) Priorität: 15.10.87 CH 4045/87

(43) Veröffentlichungstag der Anmeldung:
19.04.89 Patentblatt 89/16

(45) Bekanntmachung des Hinweises auf die
Patenterteilung:
25.09.91 Patentblatt 91/39

(84) Benannte Vertragsstaaten:
CH DE ES GB IT LI NL

(56) Entgegenhaltungen:
GB-A- 2 044 230
US-A- 3 889 445

(73) Patentinhaber: SIG Schweizerische
Industrie-Gesellschaft
CH-8212 Neuhausen am Rheinfall (CH)

(72) Erfinder: Fluck, René
Schlechtenbolweg 645
CH-8226 Schleitheim (CH)

(74) Vertreter: White, William et al
Patentanwalts-Bureau Isler AG Postfach 6940
CH-8023 Zürich (CH)

**Beschreibung**

Ein Verfahren und eine Vorrichtung gemäss Oberbegriff der Ansprüche 1 und 2 ist aus der DE-OS 2713205 bekannt. Diese bekannte Vorrichtung ist unmittelbar vor einer Verpackungsmaschine angeordnet und bildet aus einer von einem Backofen angelieferten Kolonne von Biscuits mittels eines Stapelbildners stehende Biscuitstapel. Der Stapelbildner umfasst zwei gegenläufig um in Transportrichtung verlaufende Achsen drehbare, sternförmige Walzen. Die Biscuits werden durch ein erstes Förderband in die längsverlaufenden Ausnehmungen der Walzen eingeschoben und stossen schliesslich an einem Anschlag mit einem Taster an. Wenn der Druck auf den Taster eine vorgegebene Grösse erreicht, werden die Walzen um eine Teilung gedreht, so dass die in den Walzen befindliche Biscuitkolonne angehoben oder abgesenkt wird und die folgenden Biscuits in die nächste Ausnehmung eingeschoben werden. Wenn die Biscuitstapel eine vorgegebene Höhe erreicht haben, schiebt ein Stössel die Stapel quer zur Förderrichtung des ersten Förderbandes auf ein zweites Förderband, das die Stapel der Verpackungsmaschine zuführt. Diese bekannte Vorrichtung hat eine sehr geringe Speicherkapazität, da die Biscuits in flachliegenden Kolonnen dem Stapelbildner zugeführt werden und diese Kolonnen für eine gegebene Länge nur wenig speichern können. Eine grosse Speicherkapazität ist vor allem zur optimalen Auslastung der Verpackungsmaschinen erwünscht, damit kurze Betriebsunterbrüche aufgefangen und bei längeren Unterbrüchen ohne Ausschussproduktion auf eine Reserveverpackungsmaschine umgeschaltet werden kann.

Vorrichtungen mit einer erheblich grösseren Speicherkapazität sind z.B. aus der GB-PS 2'044'230 bekannt, in welcher vorgeschlagen wird, die Biscuits nach dem Backofen zu einer Kolonne hochkant stehender, flachseitig aneinander liegender Biscuits zu stapeln. Diese Kolonne kann über Speicherstrecken, Weichen usw. und über Portioniereinrichtungen z.B. gemäss US-PS 4,209,960 oder GB-PS 1'413'970 den Verpackungsmaschinen zugeführt werden. Auf diesen Transportstrecken werden allerdings die Biscuits erheblich beansprucht.

Aus der US-PS 4,662,152 ist eine Vorrichtung zur Bildung eines Biscuitstapels in einem Verpackungsbehälter bekannt. Dieser Vorrichtung wird ebenfalls eine Kolonne flachliegender Biscuits auf einem Förderband angeliefert. Der Endabschnitt dieses Bandes ist schwenkbar. Im Takt mit den angelieferten Biscuits wird er schrittweise hochgefahren, so dass die Biscuits von unten nach oben in den seitlich offenen Verpackungsbehälter eingefüllt werden. Um diesen Takt sicherzustellen, sind stromaufwärts des Förderbandes Anschlagfinger vorgesehen, welche die ankommenden Biscuits anhalten und in geregeltem Takt dem Förderband übergeben. Auch bei dieser Vorrichtung ist die Speicherkapazität beschränkt.

Der vorliegenden Erfindung liegt die Aufgabe zugrunde, ein Verfahren und eine Vorrichtung zum Stapeln und zum Transport von Nahrungsmittelscheiben anzugeben, die eine grosse Speicherkapazität und eine schonende Behandlung der Scheiben ermöglichen. Diese Aufgabe wird durch die kennzeichnenden Merkmale der Ansprüche 1 und 2 gelöst.

Nachfolgend wird ein Ausführungsbeispiel der Erfindung anhand der Zeichnung erläutert. Darin zeigt :

Fig. 1    eine schematische Draufsicht auf eine Anlage,
Fig. 2    einen Vertikalschnitt durch eine erfindungsgemässe Stapeleinrichtung,
Fig. 3    einen Schnitt längs der Linie III-III in Fig. 2,
Fig. 4    den Stapelbildner nach Fig. 2 und 3 in vergrössertem Massstab,
Fig. 5    eine Variante des Stapelbildners nach Fig. 2 bis 4, und
Fig. 6    einen Längsschnitt durch eine zweite Ausführungsform.

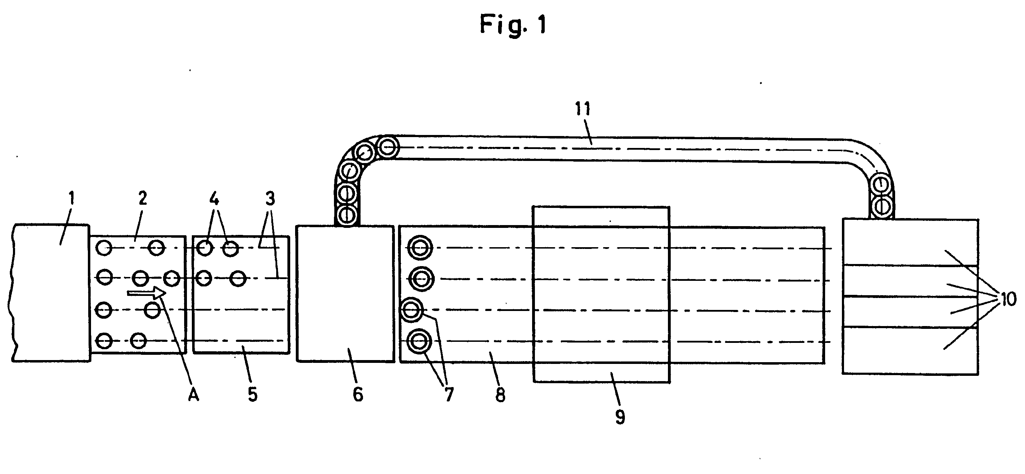

Die Anlage nach Fig. 1 umfasst einen Durchlaufbackofen 1, der auf einer Plattenförderkette 2 mehrere Kolonnen 3 von Biscuits 4 anliefert. Von der Förderkette 2 werden die Biscuits 4 in Förderrichtung A einem Förderband 5 übergeben. Das Band 5 mündet in einer Stapeleinrichtung 6, in welcher die Biscuits 4 jeder Kolonne 3 je in Behälter 7 flachseitig aufeinanderliegend gestapelt werden. Die gefüllten Behälter 7 werden auf einem zweiten Förderband 8 über eine Speichereinrichtung 9 mehreren Verpackungsmaschinen 10 zugeführt. Die Speichereinrichtung 9 enthält zweckmässig auch eine Vorrichtung, um die gefüllten Behälter 7 gleichmässig auf die betriebsbereiten Verpackungsmaschinen 10 zu verteilen. Unmittelbar vor oder in den Verpackungsmaschinen 10 werden die Biscuitstapel den Behältern 7 entnommen. Die leeren Behälter 7 laufen auf einem dritten Förderband 11 zur Stapeleinrichtung 6 zurück.

Die unregelmässig flachliegend vom Backofen 1 angelieferten Biscuits 4 werden also unmittelbar nach dem Ofen 1 in Verpackungseinheiten vertikal gestapelt in die Behälter 7 eingefüllt. Dadurch wird der Platzbedarf wesentlich reduziert. Die Biscuits 4 werden in den Behältern 7 schonend transportiert und sind dadurch vor Bruch und Abrieb geschützt. Die Behälter 7 können sehr einfach über Weichen, Verteiler, Speicher und Transportstrecken geführt werden, so dass die Verpackungsmaschinen 10 optimal ausgelastet werden können, ohne dass Ausschuss entsteht. Die umlaufenden Behälter 7 ermöglichen auch eine einfache Anpassung an andere Biscuitformen, indem lediglich die Behälter 7 gegen andere mit gleicher Aussenkontur, aber der andern Biscuitform angepasstem Innenquerschnitt ausgetauscht werden. Die Transport-, Speicher- und Verteilvorrichtungen zwischen der Stapeleinrichtung 6 und den Verpackungsmaschinen 10 müssen dazu nicht verändert werden. Die Behälter 7 haben Synchronisier- und Speicherfunktion und stellen damit eine Verbindung zwischen der unsynchronisierten Biscuitzufuhr vom Backofen 1 und dem synchronisierten Takt der Verpackungsmaschinen 10 her.

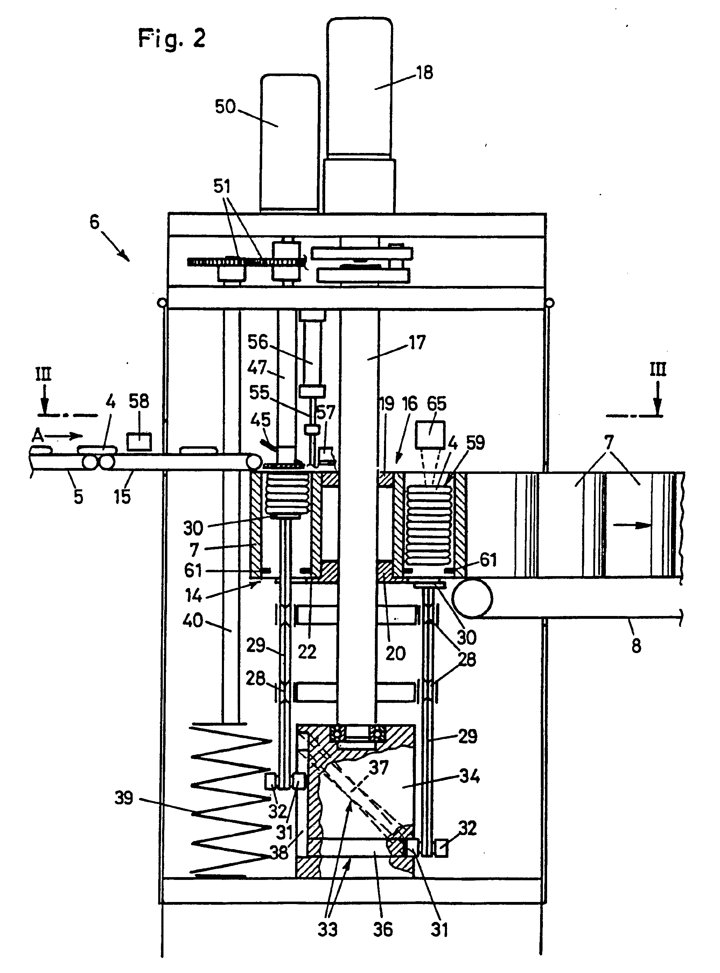

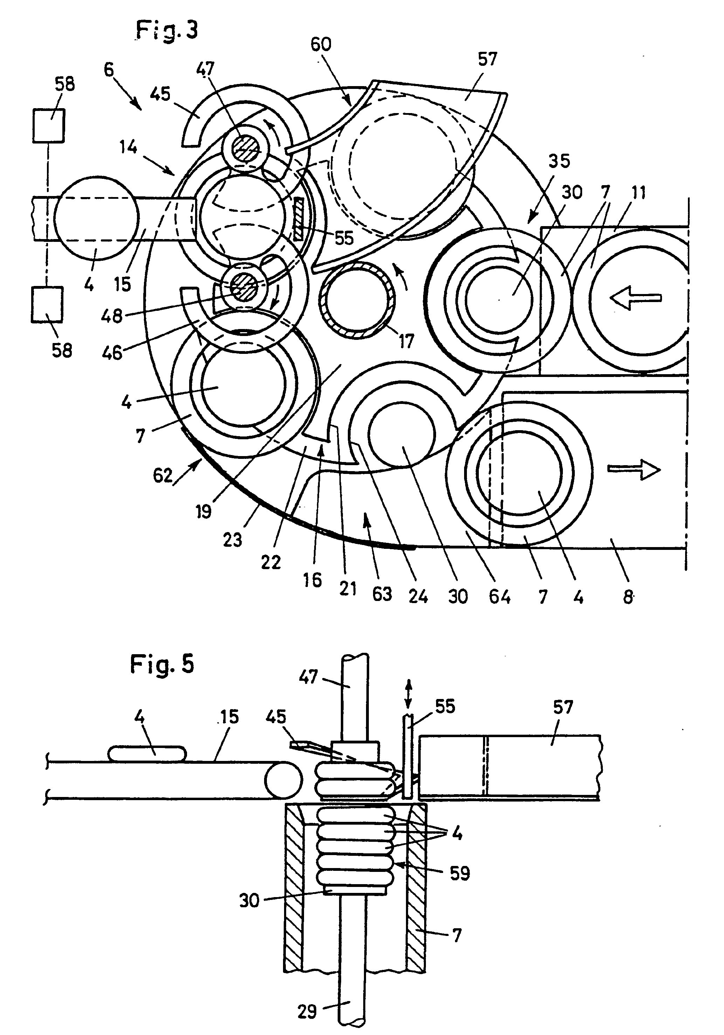

In den Fig. 2 bis 4 ist die Stapeleinrichtung 6 detaillierter dargestellt. Im Vertikalschnitt gemäss Fig. 2 ist ersichtlich, dass an das Förderband 5 ein weiteres Förderband 15 anschliesst. Das Förderband 15 endet oberhalb und vor der Innenwand des in der Füllstellung 14 bereitstehenden zylindrischen, oben offenen Behälters 7. Die Behälter 7 werden der Füllstellung 14 durch einen indexierbaren, sternförmigen Drehtisch 16 zugeführt. Der Drehtisch 16 ist an einer vertikalen Welle 17 befestigt, die durch einen Elektromotor 18 jeweils in Schritten von 72° drehbar ist und besteht aus zwei Platten 19, 20 mit zylindrischen Ausnehmungen 21 zur Aufnahme der Behälter 7. Die Behälter 7 sind unten durch einen vorspringenden Flansch 22 der unteren Platte 20 gehalten und aussen durch ein Leitblech 23 geführt. Der Flansch 22 hat kreisförmige Ausschnitte 24 koaxial zu den Ausnehmungen 21. Die Welle 17 trägt unterhalb des Drehtisches 16 zwei axial voneinander beabstandete Sterne von Führungsrollen 28. Zwischen je vier dieser Rollen 28 ist ein Vierkantstab 29 koaxial zu den Ausnehmungen 21 verschiebbar geführt. Jeder Stab 29 trägt oben einen Abholboden 30 und unten radial zur Achse des Drehtisches 16 gerichtet eine Nockenrolle 31 und radial der Rolle 31 gegenüberliegend eine Mitnehmerrolle 32. Die Rolle 31 läuft in einer Führungskurve 33 auf dem Mantel eines stationären Führungszylinders 34. Die Führungskurve 33 hat einen unteren, horizontalen, von der Füllstellung 14 bis zur Zufuhrstation 35 für leere Behälter 7 verlaufenden Abschnitt 36, einen von der Zufuhrstation 35 zur Füllstellung 14 wendelförmig ansteigenden Abschnitt 37 sowie einen die Enden der Abschnitte 36, 37 in der Füllstellung 14 verbindenden vertikalen Abschnitt 38. In der Füllstellung 14 greift die Mitnehmerrolle 32 in eine Wendel 39 ein, die durch eine parallel zur Welle 17 verlaufende Welle 40 angetrieben ist.

In der Füllstellung 14 sind unmittelbar oberhalb des Behälters 7 zwei spiegelbildliche, eingängige Förderwendeln 45, 46 auf vertikalen Wellen 47, 48 symmetrisch zur vertikalen Längsmittelebene des Förderbandes 15 befestigt. Die Wellen 47, 48 sind an ihrem anderen Ende durch gleich grosse Zahnräder 49 miteinander verbunden, so dass sie gegenläufig synchron drehen. Die Welle 48 wird durch einen Schrittmotor 50 angetrieben. Die Welle 47 ist über einen weiteren Getrieberadsatz 51 mit der Welle 40 verbunden.

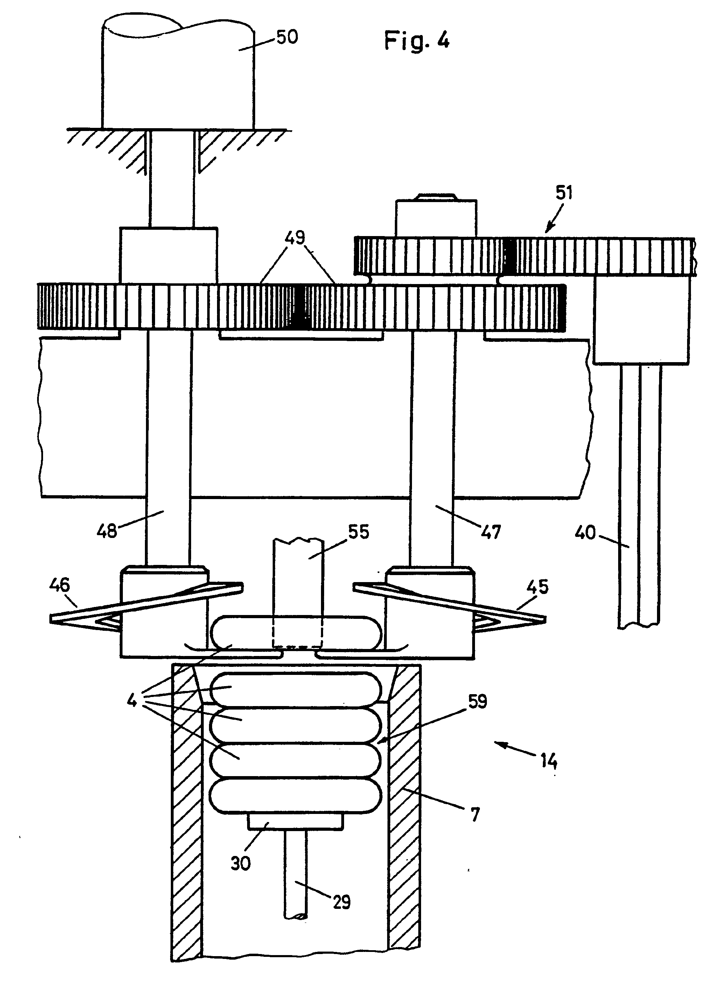

In der Flucht des Förderbandes 15 ist hinter den Förderwendeln 45, 46 ein Anschlag 55 oberhalb des Behälters 7 und benachbart dessen Innenwand angeordnet. Der Anschlag 55 ist etwas federnd und besteht z.B. aus einem flachen Stab aus Polyamid. Er kann dem Förderband 15 zugewandt eine dämpfende Beschichtung z.B. aus Schaumgummi aufweisen. Der Anschlag 55 ist vertikal aus der in Fig. 2 und 4 dargestellten Grundstellung, in welcher er die durch das Förderband 15 angelieferten Biscuits 4 auffängt, durch einen Pneumatikzylinder 56 in eine Stellung anhebbar, so dass in einem Störungsfall Biscuitreste aus den Förderwendeln 45, 46 mit Hilfe von Blasluft ausblasbar sind und über eine Rutsche 57 in einen nicht dargestellten Abfallbehälter gelangen.

Die beschriebene Stapeleinrichtung 6 arbeitet wie folgt : Auf dem Förderband 5 werden kontinuierlich in unregelmässigen Abständen Biscuits 4 angeliefert. Das Förderband 15 läuft rascher, damit zwischen aufeinanderfolgenden Biscuits 4 Abstand geschaffen wird, auch wenn sie auf dem Band 5 dicht aufeinander folgen. Ein Lichtschrankenfühler 58 unmittelbar vor der Füllstellung 14 liefert für jedes durchlaufende Biscuit 4 einen Impuls, der über eine Verzögerung entsprechend der Geschwindigkeit des Bandes 15 und der Strecke zwischen Lichtschranke 58 und Anschlag 55 den Schrittmotor 50 ansteuert, so dass dieser die Wellen 47, 48 um eine ganze Umdrehung dreht. Damit wird das am Anschlag 55 angehaltene Biscuit 4 nach unten auf den im Behälter 7 in der Füllstellung 14 befindlichen Biscuitstapel 59 befördert, wobei durch die Wendeln 45, 46 eine die Erdbeschleunigung übersteigende Beschleunigung ermöglicht wird. Dadurch können die Biscuits 4 in sehr rascher Folge auf den sich bildenden Stapel 59 abgelegt werden. Ueber den Radsatz 51 wird dabei gleichzeitig die Wendel 39 gedreht, so dass der Abholboden 30 um die Biscuitdicke nach unten verschoben wird. Die Umdrehungen des Schrittmotors 50 werden gezählt. Wenn der Stapel 59 die für die Verpackung vorgesehene Anzahl Biscuits 4 enthält, schaltet der Drehtisch 16 um einen Schritt weiter, so dass ein leerer Behälter 7 aus einer Wartestellung 60 in die Füllstellung 14 gelangt. Der in diesem Behälter 7 bereits angehobene Abholboden 30 wird dabei durch den Abschnitt 37 der Führungskurve 33 in die obere Endstellung gefahren und die zugehörige Rolle 32 greift in der Füllstellung 14 in die Wendel 39 ein. Der gefüllte Behälter 7, in welchem der Biscuitstapel 59 auf Stiften 61 am unteren Ende des Behälters 7 aufliegt, gelangt in eine Wartestellung 62. Um bei dieser Bewegung den Abholboden 30 noch ganz aus dem gefüllten Behälter 7 auszufahren, kann der Führungskurvenabschnitt 36 zwischen der Füllstellung 14 und der Stellung 62 etwas nach unten geneigt sein. Der zuvor in der Stellung 62 befindliche gefüllte Behälter 7 wird bei der Drehung des Drehtisches 16 in eine Entnahmestellung 63 verschoben und läuft dabei zunächst auf ein annähernd horizontales Stützblech 64 auf. Von

3

diesem wird er bei der nächsten Tischdrehung durch den nächsten Behälter 7 auf das Förderband 8 geschoben und abtransportiert. Auf dem Förderband 11 werden laufend leere Behälter 7 in die leeren Ausnehmungen 21 nachgeschoben. In der Wartestellung 62 kann noch eine Kontrolleinrichtung 65 angeordnet werden, um die Höhe des Stapels 59 zu messen. Der Schaltschritt des Drehtisches 16 ist so kurz bemessen, dass im allgemeinen bereits das nächstfolgende Biscuit 4 in dem neuen leeren Behälter abgelegt werden kann. Sollte eine Störung auftreten, indem sich beispielsweise ein Biscuit mit zu grossen Masstoleranzen in den Wendeln 45, 46 verklemmt, wird die Biscuitzufuhr unterbrochen, der Anschlag 55 durch den Zylinder 56 angehoben und das Signal der Lichtschranke 58 zum Schrittmotor 50 unterbrochen. Mittels nicht dargestellter Blasluft wird das verklemmte Biscuit aus den Wendeln 45, 46 ausgeblasen, so dass es über die Rutsche 57 in einen nicht dargestellten Abfallbehälter gelangt.

Durch die beschriebene Stapeleinrichtung 6 ist es möglich, die vom Ofen 1 in unregelmässigen Abständen angelieferten Biscuits 4 direkt in den für die Verpackung vorgesehenen Portionen zu stapeln. Im Gegensatz zu bekannten Portioniereinrichtungen z.B. gemäss GB-PS 1'413'970 oder US-PS 4,209,960 ist dazu kein Stau der zu portionierenden Biscuits nötig, so dass die Biscuits 4 schonend behandelt werden und ein Zwischenmagazin zur Bildung der Portionen vermieden wird.

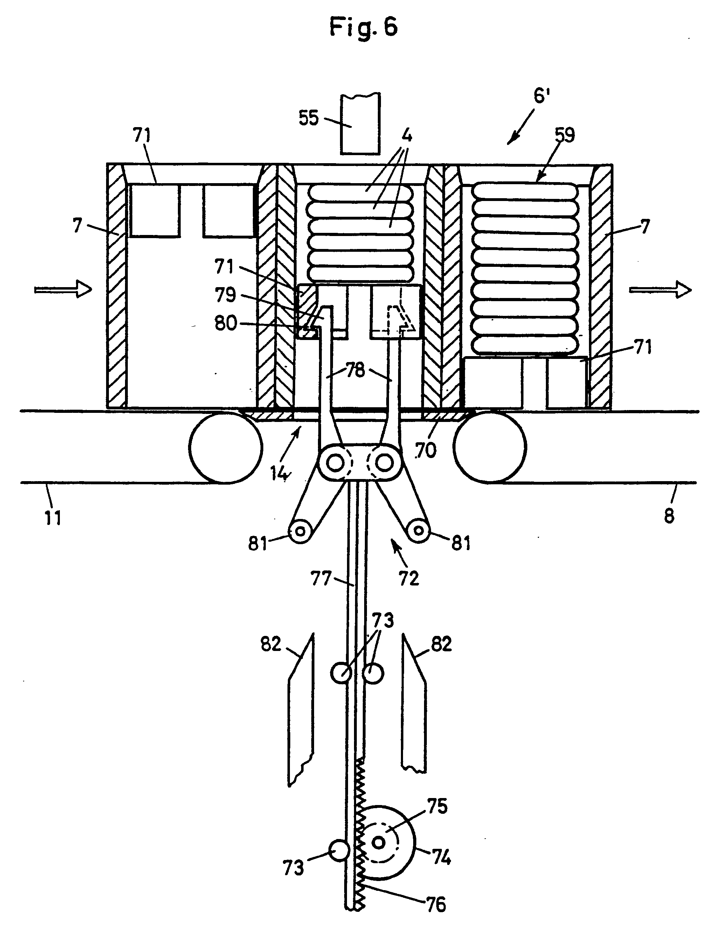

Bei der Ausführungsform nach Fig. 2 bis 4 haben die Wendeln 45, 46 eine Steigung, die etwas grösser als die Dicke eines Biscuits 4 ist. Die Wendeln 45, 46 führen bei jedem eintreffenden Biscuit 4 eine Drehung aus und legen also die Biscuits 4 einzeln auf den Stapel 59 ab. Bei der Variante nach Fig. 5 ist dagegen die Steigung der Wendeln 45, 46 doppelt so gross und die Wendeln 45, 46 machen nur bei jedem zweiten eintreffenden Biscuit 4 eine Umdrehung, legen also jeweils zwei Biscuits 4 gleichzeitig auf den Stapel 59 ab. Dies hat den Vorteil, dass für den Schaltschritt des Drehtisches 16 mehr Zeit zur Verfügung steht.

In Fig. 6 ist eine weitere Ausführungsform einer Stapeleinrichtung 6' dargestellt. Hier sind die Förderbänder 11 und 8 in einer Linie angeordnet. Die leeren Behälter 7 werden durch das Förderband 11 auf einen stationären Tisch 70 gegen einen nicht dargestellten, ausrückbaren Anschlag in die Füllstellung 14 geschoben. Jeder Behälter 7 enthält einen an seiner Innenwand reibschlüssig anliegenden Abholboden 71, der bei den leeren Behältern 7 in der oberen Grenzstellung ist. In der Füllstellung 14 fährt von unten in einen frisch zugeführten leeren Behälter 7 eine Greifeinrichtung 72 ein. Die Greifeinrichtung 72 ist auf einer vertikalen, durch Rollen 73 geführten, mittels eines Motors 74 z.B. über ein Ritzel 75 und eine Zahnstange 76 längs ihrer Achse verschiebbaren Vierkantstange 77 montiert und umfasst zwei zweiarmige Schwenkhebel 78. Das freie Ende der oberen Arme dieser Hebel 78 hat einen Widerhaken 79, der beim Einfahren der Greifeinrichtung 72 in eine Nut 80 des Abholbodens 71 einrastet. In der Füllstellung 14 wird dann der Abholboden 71 sukzessive im Takt mit den eintreffenden Biscuits 4 nach unten verschoben. Benachbart der unteren Endstellung der Greifeinrichtung 72 laufen Rollen 81 am freien Ende der unteren Arme der Schwenkhebel 78 auf Schrägflächen 82 auf und verschwenken die Hebel 78 derart, dass die Widerhaken 79 aus der Nut 80 ausklinken und die Greifeinrichtung 72 bis unterhalb der Oberseite des Tisches 70 abgesenkt werden kann. Nun wird der den Behälter 7 in der Füllstellung 14 haltende Anschlag ausgerückt und der volle Behälter 7 wird durch den nachrückenden leeren Behälter 7 auf das Förderband 8 weggeschoben und abtransportiert.

Durch den separaten Antrieb des Abholbodens 71 ist hier eine einfache Umstellung der Stapeleinrichtung auf andere Biscuitdicken oder andere Stückzahlen der Stapel 59 in den Behältern 7 möglich. Die Greifeinrichtung 72 kann jedoch auch wie bei der Ausführungsform nach Fig. 2 bis 4 mit einem Drehtisch umlaufend ausgebildet werden.

In der Verpackungsmaschine 10 können die Behälter 7 z.B. auf einem Drehtisch analog dem Drehtisch 16 mit Stösseln analog den Abholböden 30 gemäss Fig. 2 bis 4 entleert werden, wobei die Bewegung der Stössel und die Drehung des Drehtisches mit dem Takt der Verpackungsmaschinen 10 gekoppelt ist.

Die Behälter 7 sind mit ihrer Innenkontur den zu verpackenden Biscuits angepasst und können z.B. bei rechteckigen Biscuits auch prismatisch sein. Sie können z.B. auch aus einem Stützring und davon abstehenden, parallelen Stangen bestehen.

## Patentansprüche

1. Verfahren zur Bildung und zum Transport von Gruppen flachseitig aneinander liegender Nahrungsmittelscheiben (4), insbesondere Biscuits, wobei die Scheiben (4) von einer Produktionsmaschine (1) flachliegend auf einem ersten Transportorgan (15) einer Stapeleinrichtung (6) zugeführt werden, in welcher ein Stapel (59) gebildet wird, der auf einem zweiten Transportorgan (8) weggefördert wird, dadurch gekennzeichnet, dass der Stapel (59) anschliessend an die Produktionsmaschine (1) in einem von einer Vielzahl von zwischen der Stapeleinrichtung (6) und der Verpackungsmaschine (10) umlaufenden Behältern (7) gebildet wird, wobei die gefüllten Behälter (7) durch das zweite Transportorgan (8) zu einer Verpackungsmaschine (10) gefördert und dort entleert und die leeren Behälter (7) auf einem dritten Transportorgan (11) von der Verpackungsmaschine (10) zur Stapeleinrichtung (6) zurücktransportiert werden.

2. Einrichtung zur Durchführung des Verfahrens nach Anspruch 1, umfassend ein erstes Transportorgan (15) zur Zufuhr einer Kolonne flachliegender Nahrungsmittelscheiben (4) benachbart der einen Stirnseite des zu bildenden Stapels (59), eine Stapeleinrichtung (6) mit einem Anschlag (55), gegen welchen eine Scheibe (4) mit ihrer Vorderseite anschlägt, und einem Fühler (58) zum Erfassen der Scheibe (4) und zum schrittweisen Weiterschalten eines Stapelbildners (45, 46), sowie ein zweites Transportorgan (8) zum Wegfördern des gebildeten Stapels (59), dadurch gekennzeichnet, dass der Stapelbildner (45, 46) stirnseitig eines zylindrischen oder prismatischen, an mindestens einer Stirnseite offenen, in einer Füllstellung (14) arretierbaren, zwischen der Stapeleinrichtung (6) und einer Verpackungsmaschine (10) umzulaufen bestimmten Behälters (7) in dessen Füllstellung (14) angeordnet ist, dass der Fühler (58) stromaufwärts des Stapelbildners (45, 46) angeordnet ist, und dass eine Einrichtung (16) zur Uebergabe des gefüllten Behälters (7) an das zweite, zur Verpackungsmaschine fördernde Transportorgan (8) sowie zur Zufuhr eines in der Verpackungsmaschine (10) entleerten, auf einem dritten Transportorgan (11) von der Verpackungsmaschine (10) zur Stapeleinrichtung (6) zurücktransportierten Behälters (7) in die Füllstellung (14) angeordnet ist.

3. Einrichtung nach Anspruch 2, dadurch gekennzeichnet, dass der Stapelbildner (45, 46) oberhalb des in der Füllstellung (14) befindlichen Behälters (7) angeordnet ist, dass das erste Transportorgan (15) vor der Innenwand dieses Behälters (7) endet, und dass im Behälter (7) in der Füllstellung (14) ein in Richtung der Behälterachse motorisch verschiebbarer Abholboden (30) angeordnet ist.

4. Einrichtung nach Anspruch 3, dadurch gekennzeichnet, dass der Abholboden (30) schrittweise synchron mit der Bewegung des Stapelbildners (45, 46) nach unten verschiebbar ist.

5. Einrichtung nach einem der Ansprüche 2 bis 4, dadurch gekennzeichnet, dass der Fühler (58) eine Lichtschranke ist.

6. Einrichtung nach einem der Ansprüche 2 bis 5, dadurch gekennzeichnet, dass stromaufwärts des ersten Transportorgans (15) ein weiteres Transportorgan (5) mit geringerer Transportgeschwindigkeit angeordnet ist.

7. Einrichtung nach einem der Ansprüche 2 bis 6, dadurch gekennzeichnet, dass der Stapelbildner zwei symmetrisch zur Bahn des ersten Transportorgans (15) angeordnete, gegenläufig um senkrecht zu dieser Bahn verlaufende Achsen (47, 48) angetriebene Förderwendeln (45, 46) umfasst.

8. Einrichtung nach Anspruch 7, dadurch gekennzeichnet, dass die Steigung der Förderwendeln (45, 46) annähernd der einfachen oder der doppelten Dicke der zu stapelnden Scheiben (4) entspricht.

9. Einrichtung nach einem der Ansprüche 2 bis 8, dadurch gekennzeichnet, dass der Behälter (7) auf einem indexierbaren Drehtisch (16) mit einer Eingabestation (35) für leere Behälter (7), einer die Füllstellung (14) bildenden Füllstation und einer Entnahmestation (63) indexierbar ist.

10. Einrichtung nach den Ansprüchen 3 und 9, dadurch gekennzeichnet, dass jeder Station (14, 35, 63) des Drehtisches (16) ein Abholboden (30) zugeordnet ist, und dass jeder Abholboden (30) einen Mitnehmer (31, 32) aufweist, der in einer geschlossenen stationären Führungskurve (33) läuft, welche zwischen der Eingabestation (35) und der Füllstellung (14) wendelförmig nach oben verläuft, in der Füllstellung (14) einen parallel zur Drehtischachse verlaufenden Abschnitt (38), und zwischen der Füllstellung (14) und der Entnahmestation (63) einen anähernd senkrecht zur Drehtischachse verlaufenden Abschnitt (36) aufweist, und dass der Mitnehmer (31, 32) in der Füllstellung (14) mit einer parallel zur Drehtischachse angeordneten, synchron mit dem Stapelbildner (45,46) angetriebenen Führungswendel (39) wirkverbunden ist.

11. Einrichtung nach einem der Ansprüche 2 bis 10, dadurch gekennzeichnet, dass der Anschlag (55) aus der Bahn der Scheibe (4) verschiebbar ist.

## Claims

1. Method for forming and conveying groups of foodstuff discs (4), in particular biscuits, which abut against one another on their flat sides, wherein the discs (4) are delivered by a production machine (1) lying flat on a first conveying member (15) to a stacking device (6), in which a stack (59) is formed, which is conveyed away on a second conveying member (8), characterised in that the stack (59) is formed, subsequent to the production machine (1), in one of a plurality of containers (7) which circulate between the stacking device (6) and the packaging machine (10), wherein the filled containers (7) are conveyed by the second conveying member (8) to a packaging machine (10), where they are emptied, and the empty containers (7) are conveyed on a third conveying member (11) from the packaging machine (10) back to the stacking device (6).

2. Device for carrying out the method as in claim 1, comprising a first conveying member (15) for supplying a column of flat-lying foodstuff discs (4) adjacent to one end face of the stack (59) to be formed, a stacking device (6) with a stop (55), against which a disc (4) strikes with its front edge, and a sensor (58) for detecting

EP 0 312 490 B1

the disc (4) and for the step-wise further switching of a stack former (45, 46), as well as a second conveying member (8) for conveying away the stack (59) formed, characterised in that the stack former (45, 46) is disposed on the end face of a cylindrical or prismatic container (7), which is open on at least one end, can be locked in a filling position (14) and is intended for circulating between the stacking device (6) and a packaging machine (10), in the filling position (14) thereof, the sensor (58) is disposed upstream of the stack former (45, 46), and a device (16) is disposed for transferring the filled container (7) to the second conveying member (8), which delivers to the packaging machine, as well for delivering a container (7), which is emptied in the packaging machine (10) and is conveyed on a third conveying member (11) from the packaging machine (10) back to the stacking device (6), into the filling position (14).

3. Device as in claim 2, characterised in that the stack former (45, 46) is disposed above the container (7), which is in the filling position (14), the first conveying member (15) ends before the inner wall of this container (7), and a collecting tray (30), which can be displaced by a motor in the direction of the container axis, is disposed in the container (7) in the filling position (14).

4. Device as in claim 3, characterised in that the collecting tray (30) can be displaced downwards in a step-like manner in synchronism with the movement of the stack former (45, 46).

5. Device as in any of claims 2 to 4, characterised in that the sensor (58) is a light barrier.

6. Device as in any of claims 2 to 5, characterised in that a further conveying member (5) having a slower conveying speed is disposed upstream of the first conveying member (15).

7. Device as in any of claims 2 to 6, characterised in that the stack former comprises two conveyor coils (45, 46), which are disposed symmetrically with respect to the course of the first conveying member (15) and are driven in opposite directions about axes (47, 48), which are perpendicular to this course.

8. Device as in claim 7, characterised in that the pitch of the conveyor coils (45, 46) corresponds substantially to the single or double thickness of the discs (4) to be stacked.

9. Device as in any of claims 2 to 8, characterised in that the container (7) can be indexed on an indexable rotary table (16) having an input station (35) for empty containers (7), a filling station forming the filling position (14), and a removal station (63).

10. Device as in claims 3 and 9, characterised in that each station (14, 35, 63) of the rotary table (16) is associated with a collecting tray (30), and each collecting tray (30) has a cam (31, 32), which runs in a closed, stationary guide curve (33), which extends upwards between the input station (35) and the filling position (14) in a helical manner, and, in the filling position (14), has a portion (38), which extends parallel to the rotary table axis, and, between the filling position (14) and the removal station (63), has a portion (36), which extends substantially perpendicular to the rotary table axis, and the cam (31, 32) is operatively connected in the filling position (14) to a guide coil (39), which is disposed parallel to the rotary table axis and driven in synchronism with the stack former (45, 46).

11. Device as in any of claims 2 to 10, characterised in that the stop (55) is displaceable out of the path of the disc (4).

## Revendications

1. Procédé de formation et de transport de groupes de rondelles de produits alimentaires (4) disposées à plat les unes à côté des autres, en particulier des biscuits, dans lequel les rondelles (4) sont amenées à plat à un premier élément de transport (15) d'un dispositif d'empilage (6) dans lequel est formée une pile (59) qui est emmenée sur un autre élément de transport (8), caractérisé en ce que la pile (59) est formée ensuite, dans la machine de production (1), dans l'un d'une série de conteneurs (7) tournant entre le dispositif d'empilage (6) et la machine d'emballage (10), les conteneurs pleins (7) sont amenés à une machine d'emballage (10) où ils sont vidés, et les conteneurs vides (7) sont ramenés de la machine d'emballage vers le dispositif d'empilage (6) sur un troisième élément de transport (11).

2. Dispositif pour la mise en oeuvre du procédé selon la revendication 1, comprenant un premier élément de transport (15) pour amener une colonne de rondelles de denrées alimentaires (4) disposées à plat à proximité d'un des côté frontaux de la pile à former (59), un dispositif d'empilage (6) comprenant une butée (55) qu'une rondelle (4) vient heurter par sa partie avant, et un détecteur (58) pour déceler la rondelle (4) et pour déclencher de façon intermittente un appareil d'empilage (45, 46), ainsi qu'un deuxième élément de transport (8) pour éloigner la pile formée (59), caractérisé en ce que l'appareil d'empilage (45, 46) est disposé du côté frontal d'un conteneur (7), lorsque celui-ci est en position de remplissage (14), ledit conteneur (7) étant cylindrique ou prismatique, ouvert au moins sur un côté frontal, pouvant être bloqué en position pleine (14) et destiné à tourner entre le dispositif d'empilage (6) et une machine d'emballage (10), que le détecteur (58) est disposé en amont de l'appareil d'empilage (45, 46), et qu'un dispositif (16) servant à transférer le conteneur plein (7)

6

vers le deuxième élément de transport (8) se déplaçant vers la machine d'emballage, ainsi qu'à amener un conteneur (7) en position de remplissage (14), lequel conteneur a été vidé dans la machine d'emballage (10) et ramené de la machine d'emballage (10) vers le dispositif d'empilage (6) sur un troisième élément de transport (11).

3. Dispositif selon la revendication 2, caractérisé en ce que l'appareil d'empilage (45, 46) est disposé au-dessus du conteneur (7) se trouvant en position de remplissage (14), que le premier élément de transport (15) s'arrête devant la paroi intérieure de ce conteneur (7), et qu'un fond d'enlèvement (30), pouvant être déplacé par un moteur dans la direction de l'axe du conteneur, est disposé dans le conteneur (7) en position de remplissage (14).

4. Dispositif selon la revendication 3, caractérisé en ce que le fond d'enlèvement (30) peut se déplacer vers le bas, de façon intermittente et synchrone avec le déplacement de l'appareil d'empilage (45, 46).

5. Dispositif selon l'une des revendications 2 à 4, caractérisé en ce que le détecteur (58) est une barrière photoélectrique.

6. Dispositif selon l'une des revendications 2 à 5, caractérisé en ce qu'un élément de transport supplémentaire (5) se déplaçant plus lentement est disposé en amont du premier élément de transport (15).

7. Dispositif selon l'une des revendications 2 à 6, caractérisé en ce que l'appareil d'empilage comprend deux hélices de transport (45, 46) disposées symétriquement par rapport à la trajectoire du premier élément de transport (15) et actionnées en sens contraire autour d'axes (47, 48) perpendiculaires à cette trajectoire.

8. Dispositif selon la revendication 7, caractérisé en ce que le pas des hélices de transport (45, 46) correspond approximativement à l'épaisseur simple ou double des rondelles (4) à empiler.

9. Dispositif selon l'une des revendications 2 à 8, caractérisé en ce que le conteneur (7) peut être adapté à un plateau tournant réglable (16), comprenant un poste d'admission (35) de conteneurs vides (7), un poste de remplissage formant la position de remplissage (14) et un poste de retrait (63).

10. Dispositif selon les revendications 3 et 9, caractérisé en ce qu'à chaque poste (14, 35, 63) du plateau tournant (16) est associé un fond d'enlèvement (30) et que chaque fond d'enlèvement (30) présente un dispositif d'entraînement (31, 32) qui tourne dans une came de guidage fermée et fixe (33), laquelle est prolongée vers le haut en forme d'hélice entre le poste d'admission (35) et la position de remplissage (14) et présente, dans la position de remplissage (14), une section (38) orientée parallèlement à l'axe du plateau tournant et une section (36) orientée à peu près perpendiculairement à l'axe du plateau tournant, entre la position de remplissage (14) et le poste de retrait (63), et que le dispositif d'entraînement (31, 32) agit conjointement, dans la position de remplissage (14), avec une hélice de guidage (39) qui est disposée parallèlement à l'axe du plateau tournant et actionnée de façon synchrone avec l'appareil d'empilage (45, 46).

11. Dispositif selon l'une des revendications 2 à 10, caractérisé en ce que la butée (55) peut être déplacée de la trajectoire de la rondelle (4).

Fig. 1

EP 0 312 490 B1

# Fig. 2

**Fig. 3**

**Fig. 5**

Fig. 4

# Fig. 6